(19) **Europäisches Patentamt**

**European Patent Office**

**Office européen des brevets**

(11) **EP 1 039 279 A2**

(12) **EUROPÄISCHE PATENTANMELDUNG**

(43) Veröffentlichungstag:
27.09.2000 Patentblatt 2000/39

(51) Int. Cl.7: **G01J 1/42**, G01J 1/02

(21) Anmeldenummer: **00104738.0**

(22) Anmeldetag: **04.03.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **23.03.1999 DE 19912971**

(71) Anmelder: **DaimlerChrysler AG**
**70567 Stuttgart (DE)**

(72) Erfinder:
• **Härle, Thomas**
  **86157 Augsburg (DE)**
• **Reisacher, Günter**
  **85051 Ingolstadt (DE)**

(74) Vertreter: **Kolb, Georg et al**
**DaimlerChrysler AG,**
**Postfach 35 35**
**74025 Heilbronn (DE)**

(54) **Verfahren zur Erfassung der Lichtleistung einer Sendediode einer optischen Überwachungseinheit sowie geeignete Schaltungsanordnung**

(57)　Bisher wurde die ausgesendete Lichtleistung einer Sendediode, im einfachsten Fall deren Betrieb überhaupt, nicht oder nur durch an äußeren Abdeckungen reflektierte Lichtanteile gemessen bzw. aus dem Flußstrom abgeleitet. Diese Verfahren sind jedoch recht ungenau und stark störanfällig.

Indem bei Überwachungseinheiten mit einer Mehrzahl von Sendedioden in der Sendeeinheit nur die zu messende Sendediode Licht emittiert, eine andere der Sendedioden jedoch als Empfänger für das auftretende Übersprechen genutzt und dieses als zur Lichtleistung proportionales Signal ausgewertet wird, kann eine höhere Genauigkeit und Sicherheit gewonnen werden. Dafür bietet sich eine Schaltungsordnung an, bei der jeweils zwei Sendedioden paarweise parallel gleichgepolt in einem Knoten zusammengeschaltet werden und diese wechselseitig entweder als aktive Sendediode mit einer Stromquelle oder als Empfänger mit einem Spannungsabgriff über einem Arbeitswiderstand verbunden werden.

FIG.1

## Beschreibung

Die Erfindung betrifft ein Verfahren zur Erfassung der Lichtleistung einer Sendediode einer optischen Überwachungseinheit.

Optische Überwachungseinheiten nach dem Reflexionsprinzip mit einer Sendeeinheit und einer räumlich davon getrennten Empfängereinheit zum Empfang des von einem Objekt reflektierten Lichts sind beispielsweise aus der DE 196 20 147, DE 197 04 793, EP 0 312 788 A2 oder EP 0 112 498 A2 bekannt und werden für unterschiedliche Anwendungszwecke, beispielsweise eine Sichtweitenmessung, eine optische Sitzbelegungserkennung in Kraftfahrzeugen, bei Reflexlichtschranken oder ähnlichem eingesetzt. Dabei wird die zu sendende Lichtleistung über den Diodenstrom bestimmt und durch einen Regelkreis zur Konstanthaltung des Diodenstroms stabilisiert. Die tatsächliche Lichtleistung der Sendedioden hängt jedoch nicht nur von deren Diodenstrom sondern auch von anderen Einflußgrößen, insbesondere der Degradation sowie Fertigungstoleranzen ab. Die Lichtleistung ist für optische Überwachungseinheiten wichtig, da sich die am Objekt reflektierten Lichtanteile sich erkennbar aus dem unvermeidlichen Störlicht, insbesondere Umgebungslicht, hervorheben müssen und teilweise auch bestimmte Anteil des emittierten Lichts zur Bewertung anderer Größen, beispielsweise der Entfernung des Objektes oder der Verschmutzung im Strahlengang, beispielsweise an einer lichtdurchlässigen Abdeckung, genutzt werden. Selbst wenn ein innerhalb eines Gehäuses der Überwachungseinheit an einer lichtdurchlässigen Abdeckung aufgrund von Verschmutzungen reflektierter Lichtanteil, wie bei der DE 197 04 793 vorgeschlagen, zur Empfangseinheit zurückgeleitet wird, kann nicht ausgeschlossen werden, daß dieser dort als Verschmutzungssignal interpretierte Lichtanteil nicht aufgrund schwankender Sendelichtleistung beeinflußt wird. Das vom zu überwachenden Objekt reflektierte Licht ist zur Erfassung ebenfalls nicht geeignet, da sich daß zu überwachende Objektbereich verändern kann.

Eine Lichtleistungsmessung mittels zusätzlicher Meßanordnungen mit weiteren lichtsensiblen Bauelementen scheidet aus Kostengründen aus.

Aufgabe der Erfindung ist es, daher ein möglichst einfaches Verfahren zur Erfassung des Lichtleistung ohne Verwendung zusätzlicher lichtsensibler Bauelemente anzugeben. Diese Aufgabe wird durch den Anspruch 1 gelöst. Darüber hinaus wird eine Schaltungsordnung zur Durchführung des Verfahrens vorgestellt, die äußerst einfach ist und insbesondere eine Integration der Sendedioden zusammen mit dieser Schaltungsanordnung auf ein Halbleitersubstrat erlaubt. Abschließend werden zwei besonders bevorzugte Verwendungsmöglichkeiten für das Verfahren vorgestellt.

Die Erfindung basiert auf der an sich zunächst bekannten Eigenschaft aller Leuchtdioden, daß diese in umgekehrter Polarität zumindest in geringem Maße für zumindest einen bestimmten Wellenlängenbereich lichtsensitiv sind und einen Fotostrom bzw. über einem Widerstand eine Fotospannung erzeugen. Jede Leuchtdiode emittiert zunächst bei einer ausreichenden Spannung in Durchlaßrichtung Licht. In dieser Form werden sie üblicherweise als Sendedioden eingesetzt und sind entsprechend dieser Funktion in Materialauswahl und Aufbau optimiert. Unter entsprechend starkem Lichteinfluß passender Wellenlänge erzeugt aber auch jede Leuchtdiode einen in Sperrichtung fließenden Fotostrom. Neben Leuchtdioden können auch physikalisch vergleichbar wirkende Bauelemente, bspw. Laserdioden, aktive optische Felder oder ähnliches übertragen. Aus dem Artikel von Herrn Mathias Handwerker in der Funkschau 20/1984, S. 83 f. ist beispielsweise eine Reflexlichtschranke zu entnehmen, bei der zwei LEDs in einem Gehäuse verwendet werden, wobei eine dieser als Empfänger für das außerhalb reflektierte Licht dient. Es wird bereits auf die bei einigen LEDs erzielbare und mit Fotodioden vergleichbare relativ hohe Fotospannung hingewiesen. Zwangsläufig tritt dabei ein Übersprechen des auszusendenden Lichts direkt auf den Empfänger auf, daß durch entsprechende Schaltungsmittel unterdrückt wird.

Gerade dieser Übersprechen kann jedoch zur Erfassung der Lichtleistung bei einer optischen Überwachungseinheit mit einer Mehrzahl von Sendedioden in einer Sendeeinheit ausgenutzt werden. Zur Erfassung der Lichtleistung emittiert jeweils nur eine der Sendedioden Licht, während zumindest eine andere Sendediode als Empfänger beschaltet wird und den im Inneren der Sendeeinheit reflektierten Anteil des Lichts als zur Lichtleistung proportionales Signal erfaßt. Daraus wird die Lichtleistung abgeleitet.

Bei allen Leuchtdioden ist es möglich, die Lichtleistung zumindest so genau zu erfassen, daß entschieden werden kann, ob überhaupt noch Licht emittiert wird, denn das Übersprechen ist im Vergleich zu Einflüssen durch Umgebungsstreulicht relativ stark. Gerade aufgrund dieser direkten Einkopplung wird auch die Stärke des reflektierten Lichtanteils für einen großen Bereich der Lichtleistung mit einfachsten schaltungstechnischen Mitteln unterscheidbar sein. Diese Erfassung ist auf jeden fall deutlich genauer und sicherer als die Ableitung aus dem Stromfluß.

Selbstverständlich ist es nur für die Lichtleistungsmessung wichtig, daß nur eine der Sendedioden sendet, um die Einflüsse der anderen auf den Empfänger zu vermeiden. Es reicht aber aus, in bestimmten Abständen eine Messung der Lichtleistung durchzuführen und im Normalbetrieb können alle Sendedioden als solche betrieben werden, gegebenenfalls auch gleichzeitig.

Als besonders bevorzugt erweist es sich, jeweils die unmittelbar benachbarte Sendediode als Empfänger einzusetzen, da das Übersprechen dort besonders hoch ist und andererseits eine Berücksichtigung des Abstandes der jeweils aktiven Sendediode zur als Empfänger genutzten Sendediode entfällt. Für dieses Verfahren ergibt sich eine besondere bevorzugte Schaltungsanordnung, bei der jeweils zwei Sendedioden paarweise zusammengeschaltet werden.

Die Erfindung soll nachfolgend anhand von Ausführungsbeispielen und Figuren näher erläutert werden. Kurze Beschreibung der Figuren:

Figur 1 Schaltungsanordnung zur Durchführung des Verfahrens mit paarweise zusammengeschalteten Sendedioden sowie Schaltungsmitteln zur wechselseitigen Ansteuerung dieser,

Figur 2 Überwachungseinheit mit einer Sendeeinrichtung und einer räumlich davon getrennten Empfangseinrichtung, wobei ein Teil des an der lichtdurchlässigen Abdeckung der Sendeeinheit reflektierten Lichts zur Verschmutzungsauswertung an die Empfangseinheit geleitet wird,

Figur 3 Stärke des Streulichts in Abhängigkeit von der Entfernung der als Empfänger geschalteten Sendediode zur aktiven Sendediode,

Figur 4 Optimierung des Arbeitswiderstands,

Figur 5 Stromspannungskennlinie für eine als Empfänger geschaltete Sendediode bei wechselnden aktiven Sendedioden sowie die Verdeutlichung der Anpassung des Meßwiderstands zur Erzielung einer optimalen Fotospannungsempfindlichkeit.

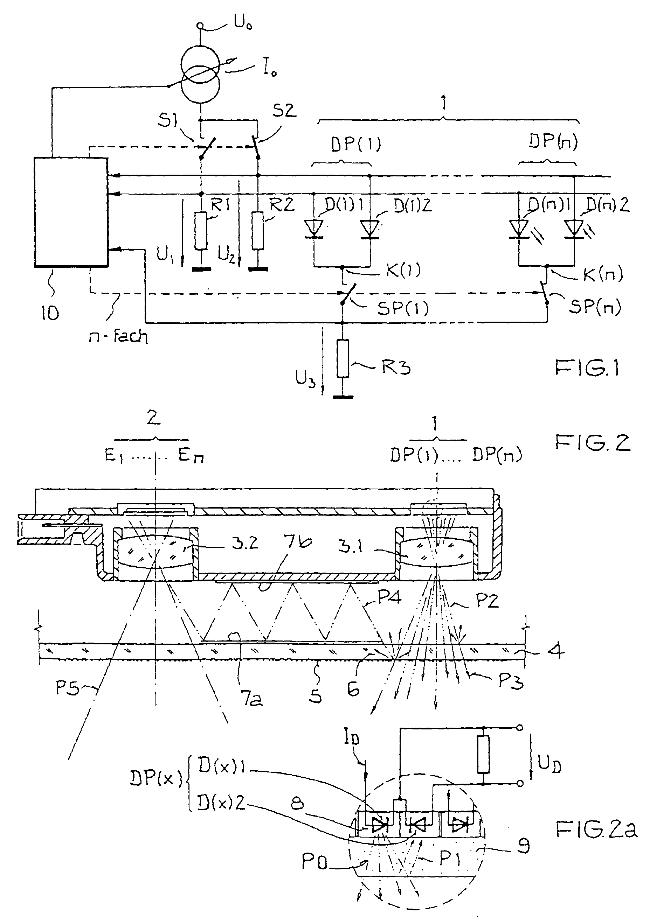

Die Figur 1 zeigt die Schaltungsanordnung innerhalb der Sendeeinheit einer Überwachungseinheit mit einer durch 2 teilbaren Anzahl 2 x n Sendedioden D, die jeweils paarweise zu n-Paaren DP(1)...DP(n) zusammengeschaltet sind. Jede der Sendedioden D kann durch entsprechende Steuerung der Schaltmittel S1, S2 sowie SP(1) bis SP(n) sowohl als Sendediode als auch als Empfänger geschaltet werden. Dies soll nachfolgend anhand des n-ten Diodenpaares DP(n) erläutert werden. So ist das Schaltmittel S2 geschlossen, so daß ein Strom von der Stromquelle l0 über S2 zur Diode D(n)2 und über diese weiter über das geschlossene Schaltmittel SP(n) und den Widerstand R3 aus Masse fließen kann. Der Widerstand R3 dient dabei auch als Shunt zur Strommessung. Die Sendediode D(n)2 emittiert dabei Licht, von dem ein gewisser Anteil durch direktes Übersprechen bzw. Reflexion an den anderen Sendedioden nachweisbar ist, sofern diese als Empfänger geschaltet sind. In diesem Ausführungsbeispiel ist jedes Diodenpaar DP(n) durch ein Schaltmittel SP(n) wählbar mit R3 auf Masse verbunden. Dieses Diodenpaar DP(n) ist jeweils aktiv, d.h. eine der Sendedioden emittiert Licht, an der anderen als Empfänger geschalteten Sendediode kann dieses nachgewiesen werden. Die Diode D(n)1 ist in diesem gezeigten Beispiel gerade als Empfänger geschaltet, indem das Schaltmittel S1 geöffnet wurde und andererseits das Schaltmittel SP(n) geschlossen ist, so daß diese Diode einen Fotostrom in Abhängigkeit von der Lichtleistung der aktiven Sendediode D(n)2 erzeugt, welcher über den Arbeitswiderstand R1 als Spannung U1 erfaßt wird. Durch Wechseln der Position der Schaltmittel S1 und S2 würde die Sendediode D(n)1 zur aktiven Sendediode und die Sendediode D(n)2 zum Empfänger deren Fotostrom bei offenem Schaltmittel S2 dann über dem Arbeitswiderstand R2 als Spannung U2 erfaßt wird. Die Steuerung der Schaltmittel S1 und S2 sowie SP1 bis SP(n) erfolgt dabei von der Zentraleinheit 10 aus die zusätzlich die Spannungen U1, U2 und U3 erfaßt. Als besonders bevorzugte Weiterbildung ergibt sich die Möglichkeit, die Stromquelle l0 steuerbar anzusteuern, so daß der jeweils durch die aktive Sendediode D(n)2 fließende Strom angepaßt wird. Dabei wird jedoch nicht nur der Strom auf einen konstanten Wert geregelt, sondern entsprechend der erfaßten Lichtleistung angepaßt. Erfaßt beispielsweise die als Empfänger geschaltete Diode D(n)1 eine schwächer werdende Lichtleistung der aktiven Sendediode D(n)2, so kann die Zentraleinheit 10 dies durch einen niedrigeren Spannungsabfall U1 erkennen und über ein entsprechendes Steuersignal an die Stromquelle l0 den durch die Sendediode D(n)2 fließenden Strom erhöhen.

Figur 2 zeigt nun eine Überwachungseinheit bestehend aus einer Sendeeinheit 1 und einer Empfangseinheit 2, wobei in der Sendeeinheit 1 eine Mehrzahl von Sendedioden zu Diodenpaaren DP(1)...DP(n) zusammengeschaltet angeordnet ist. Die Empfängereinheit besteht aus einer Anzahl von Empfangsdioden E1...E(n) die beabstandet von der Sendeeinheit angeordnet sind. Vor der Sendeeinheit 1 ist eine Sendeoptik 3.1 und vor der Empfangseinheit 2 eine Empfangsoptik 3.2 sowie vor beiden gemeinsam eine lichtdurchlässige Abdeckung 4 angeordnet an der bei Verschmutzung in zunehmendern Maße ein Anteil des ausgesendeten Lichts reflektiert wird. Der Teil P2 des diffus reflektierten Lichts wird dann mittels lichtleitende Mittel 7a und 7b zur Auswertung eines Verschmutzungssignals an die Empfangseinheit 2 geleitet, während die Empfangseinheit 2 darüber hinaus das im Zielgebiet reflektierte Licht P4 empfängt,

Figur 2a zeigt das Diodenpaar DP(x) skizzenhaft vergrößert wobei die Diode D(x)1 als Sendediode aktiv geschaltet und mit einem Diodenstrom ID durchflossen wird, so daß diese mit einer Lichtleistung P0 Licht emittiert. Benachbart dazu auf dem LED-Chip 8 ist die Sendediode D(x)2 angeordnet, die parallel zur aktiven Sendediode D(x)1 als Empfänger geschaltet ist. Diese als Empfänger geschaltete Sendediode D(x)2 erzeugt eine über dem Arbeitswiderstand R abgreifbare Fotospannung $U_D$ in Abhängigkeit von dem diffus reflektierten oder direkt eingekoppelten Lichtanteil P1. Neben der direkten Kopplung sind insbesondere Reflexion einer lichtdurchlässigen Schutzschicht 9 ausschlaggebend für dieses Übersprechen von D(x)1 auf D(x)2. Dieses Übersprechen dient zur Erfassung der Lichtleistung P0 der Sendediode D(x)1, die als annähernd proportional zum gemessenen Lichtanteil P1 angenommen werden kann. Durch Änderung der Beschaltung kann im nachfolgenden Schritt die Sendediode D(x)1 als Empfänger eingesetzt werden, wie dies bereits im Zusammenhang mit Figur 1 erläutert wurde.

Für die Verwendung des Verfahrens zur Erkennung der Verschmutzung einer vor der Sende- und Empfangseinheit 1, 2 angeordneten lichtdurchlässigen Abdeckung 4 ist diese Erfassung der Lichtleistung P0 bzw. P1 von besonderem Interesse, da hieraus bereits eine Alterung und Degradation der Sendediode genauer erkannt werden kann. Im Gegensatz dazu ist der bisher zur Verschmutzungserkennung benutzte Lichtanteil P4 bereits von dieser Lichtleistung P0 anhängig, zusätzlich jedoch auch von der Verschmutzung 5 und den dadurch unterschiedlich stark auftretenden diffusen Reflexionen 6.

Das im Zielgebiet reflektierte Licht P5 ist noch stärker von äußeren Einflüssen geprägt, insbesondere von der Entfernung der Objekte im Zielbereich und deren Reflexionseigenschaften.

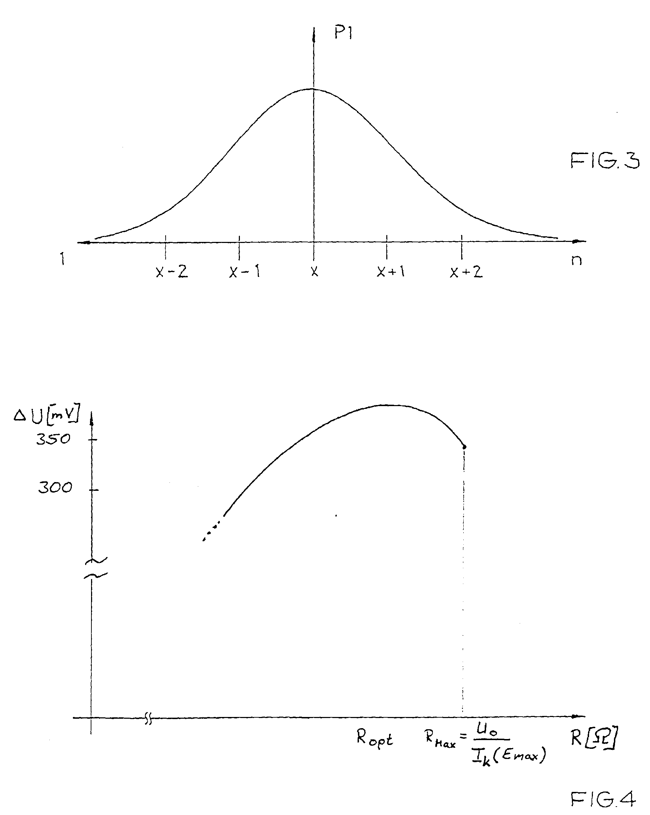

Figur 3 verdeutlicht nun die Verteilung der Übersprechwirkung in Abhängigkeit vom Abstand der als Empfänger beschalteten Sendediode von der aktiven Sendediode. Die jeweils am Empfänger meßbare Sendeleistung P1 ist dabei in unmittelbarer Nachbarschaft zur Sendediode erwartungsgemäß am größten und nimmt mit weiterer Entfernung stark ab.

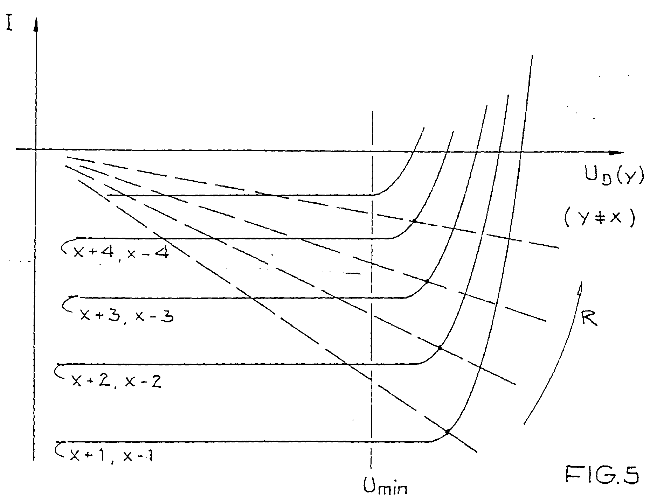

Damit verbunden ergibt sich jedoch auch die bezüglich einem Fotostrom $I_D$ in der Sendediode meßbare Fotospannung $U_D$ über dem jeweiligen Arbeitswiderstand an den jeweils benachbarten und als Empfänger geschalteten Sendedioden. Will man auf eine aufwendige Verstärkung des Fotospannungssignals verzichten, muß die Fotospannung $U_D$ die Mindestspannung $U_{min}$ erreichen und eine entsprechende Empfindlichkeit für Lichtleistungsänderungen aufweisen, was nur für die relativ nah benachbarten Sendedioden bei der Nennspannung $I_{Nenn}$ gewährleistet ist und bei niedrigeren Fotoströmen bei nicht unmittelbar benachbarten als Empfänger geschalteten Sendedioden nicht mehr ohne weiteres gewährleistet ist. Werden die Dioden nicht paarweise zusammengeschaltet und für die Messung die jeweils benachbarte Diode des Diodenpaares verwendet, so besteht eine mögliche Lösung darin, den Widerstand R, über dem die Fotospannung abgegriffen wird, so zu verändern, daß bei gegebenem Fotostrom die maximale Fotospannungsempfindlichkeit für Lichtleistungsänderungen erreicht wird, wie dies in Figur 4 und 5 skizziert ist. Ausgehend von einer angenommenen minimalen und einer maximalen Lichtleistung, die bspw. dem Umgebungslicht ohne Nutzsignal und im zweiten Fall mit einem Nutzsignal mit maximal zulässigem Diodenstrom entsprechen, werden die Empfangs-Kenngrößen der als Empfänger ausgewählten Sendediode bestimmt, insbesondere deren Leerlaufspannung Uo bei minimaler Lichtleistung sowie deren Kurzschlußströme Ik(Emin,R),Ik(Emax,R) bei minimaler und maximaler Lichtleistung bei einem geringen Arbeitswiderstand R. Der Maximalwert des Arbeitswiderstand R kann dann aus Kurzschlußspannung Uo durch Kurzschlußstrom bei maximaler Lichtleistung Ik(Emax,R) annähernd bestimmt werden. Dies ist jedoch im allgemeinen noch nicht der Arbeitspunkt der höchsten Empfindlichkeit $\Delta U=R*(Ik(Emin) - Ik(Emax))$, da Ik(Emin),Ik(Emax) selbst wiederum von R abhängig sind und die Diodenkennlinie nichtlinear ist, wie dies auch anhand des Kennlinienfeldes in Figur 5 für unterschiedliche Lichtleistungen deutlich wird. Die unterschiedlichen Lichtleistungen resultieren bereits aus einem unterschiedlich großen Abstand zwischen der als Empfänger ausgewählten Sendediode D(y), auch als Monitordiode bezeichenbar, und den unterschiedlichen nacheinander aktiven Sendedioden D(x), x≠y.

Dabei wird deutlich, daß mit zunehmender Entfernung von der aktiven Sendediode ein Abfallen der Fotospannung $U_D$ unter die Mindestspannung $U_{min}$ nur durch Veränderung des Arbeitswiderstandes R verhindert werden kann und zwar derart, daß bei entfernteren als Empfänger geschalteten Sendedioden der Widerstand R entsprechend höher werden muß, um annähernd die gleiche Empfindlichkeit zu erreichen. Eine Spannungsempfindlichkeit $\Delta U$ von über 350 mV bei ersten Messungen zeigt aber, daß auf eine aufwendige Verstärkung der Signale verzichtet werden kann. Die dafür erforderliche Widerstandsregelung bzw. Umschaltung kann bei paarweisem Betrieb gemäß Figur 1 eingespart werden, was den besonderen Vorteil dieses paarweisen Betriebs nochmals verdeutlicht.

**Patentansprüche**

1. Verfahren zur Erfassung der Lichtleistung (P0) einer Sendediode (D(n)2) einer optischen Überwachungseinheit, bestehend aus einer Mehrzahl von Sendedioden (D) angeordnet in einer Sendeeinheit (1) und wenigstens einer davon getrennten Empfangsdiode (E1...En), die Reflexionen (PS) des von den Sendedioden (D) gesendeten Lichts erfaßt und einer Auswertung zuführt, wobei

   a) zumindest in einem Zeitpunkt jeweils nur eine der Sendediode (D(n)2) Licht emittiert,
   b) zumindest eine andere Sendediode (D(n)1) als Empfänger beschaltet wird und den im Inneren der Sendeeinheit (1) reflektierten Anteil (P1) des Lichts als zur Lichtleistung (P0) proportionales Signal erfaßt und daraus die Lichtleistung (P0) abgeleitet wird.

2. Verfahren nach Anspruch 1, wobei als Empfänger (D(n)1) die zur emittierenden Sendediode (D(n)2) jeweils unmittelbar benachbarte Sendediode verwendet wird.

3. Schaltungsanordnung für eine Sendeeinheit bestehend aus einer Anzahl von Sendedioden (D(1)1...D(n)2) zur Durchführung des Verfahrens nach Anspruch 2, bei der jeweils zwei Sendedioden (D(x)1/D(x)2 : x:1...n) paarweise zueinander parallel gerichtet geschaltet und in einem Knoten (K(1)...K(n)) verbunden sind,

   a) dieser Knoten (K(1)...K(n)) über einen zur Strommessung dienenden Widerstand ($R_3$) auf ein Bezugspotential geschaltet ist,
   b) die Sendedioden (D) auf der zum Knoten (K(1)...K(n)) entgegengesetzten Seite ein steuerbares Schaltmittel (S1/S2) aufweist, wobei die Sendediode durch Schließen des Schaltmittels (S1/S2) mit einer Stromquelle ($I_o$) verbindbar ist, so daß die Sendediode (D(n)2) Licht emittiert, und
   c) zwischen Schaltmittel (S1/S2) und Sendediode ein Spannungsabgriff (U1, U2) vorgesehen ist, über dem bei geöffnetem Schaltmittel (S1, S2) ein aufgrund des im Inneren der Sendeeinheit (1) reflektierten Anteil (P1) des von der benachbarten Sendediode (D(n)1) emittierten Lichts (PØ) auftretender Fotostrom als Spannung über einem Arbeitswiderstand (R1,R2) abgreifbar ist.

4. Schaltungsanordnung nach Anspruch 3, bei der der an der als Empfänger betriebenen Sendediode (D(n)1) auftretende Fotostrom als Spannungsabfall ($U_1$, $U_2$) über einem Arbeitswiderstand ($R_1/R_2$) abgegriffen wird, dessen Widerstandswert so bestimmt ist, daß unter Berücksichtigung der Strom-Spannungs-Kennlinie der als Empfänger betriebenen Sendediode die Empfindlichkeit ($\Delta U$) für Änderungen der Lichtleistung maximal ist.

5. Schaltungsanordnung nach Anspruch 3 oder 4, bei der für jedes Paar Sendedioden (DP(1)...DP(n)) zwischen dem jeweiligen Knoten (K(1)...K(n)) und dem für alle Sendedioden gemeinsamen dritten Widerstand ($R_3$) jeweils ein Schaltmittel (SP(1)...SP(n)) angeordnet ist, durch das jeweils eines der Paare (DP(1)...DP(n)) von Sendedioden aktivierbar ist.

6. Verwendung des Verfahrens nach einem der vorangehenden Ansprüche zur Steuerung der Lichtleistung (PØ) der Sendediode (D(n)2), indem ein der Sendediode zugeführter Strom ($I_o$) in Abhängigkeit von der an der als Empfänger betriebenen Sendediode (D(n)1) erfaßten Lichtleistung (P1) geregelt wird.

7. Verwendung des Verfahrens nach einem der vorangehenden Ansprüche zur Erkennung der Verschmutzung (5) einer vor der Sende- und Empfangseinheit (1, 2) angeordneten lichtdurchlässigen Abdeckung (4), wobei lichtleitende Mittel (7a, 7b) vorgesehen sind, mittels denen ein Anteil (P4) des ausgesendeten Lichts (Po) direkt zur Empfangseinheit (2) geleitet und daraus die Verschmutzung (5) über Berücksichtigung der an der als Empfänger geschalteten Sendediode (D(n)1) erfaßbaren Lichtleistung (P1) ermittelt wird.

FIG.1

FIG. 2

FIG.2a

FIG.3

$$R_{Max} = \frac{U_o}{I_k(E_{max})}$$

FIG.4

FIG.5